Europäisches Patentamt

European Patent Office

Office européen des brevets

(19)

(11) **EP 1 268 205 B1**

(12) **EUROPÄISCHE PATENTSCHRIFT**

(45) Veröffentlichungstag und Bekanntmachung des Hinweises auf die Patenterteilung:
**24.03.2004 Patentblatt 2004/13**

(21) Anmeldenummer: 01902300.1

(22) Anmeldetag: **10.01.2001**

(51) Int Cl.⁷: **B32B 27/36**

(86) Internationale Anmeldenummer:
**PCT/EP2001/000181**

(87) Internationale Veröffentlichungsnummer:
**WO 2001/060610 (23.08.2001 Gazette 2001/34)**

(54) **EINSEITIG MATTE, SIEGELFÄHIGE, FLAMMHEMMEND AUSGERÜSTETE, KOEXTRUDIERTE, BIAXIAL ORIENTIERTE FOLIE, VERFAHREN ZU IHRER HERSTELLUNG UND VERWENDUNG**

SEALABLE, FLAME-RESISTANT, CO-EXTRUDED, BIAXIALLY ORIENTED FOIL THAT IS MAT ON ONE SIDE AND A METHOD FOR PRODUCING AND USING SAME

FILM COEXTRUDE, SCELLABLE, MAT D'UN COTE, ORIENTE BIAXIALEMENT ET EQUIPE POUR RETARDER LA COMBUSTION, SON PROCEDE DE PRODUCTION ET SON UTILISATION

(84) Benannte Vertragsstaaten:
**DE FR GB IT LU NL**

(30) Priorität: **19.02.2000 DE 10007723**

(43) Veröffentlichungstag der Anmeldung:
**02.01.2003 Patentblatt 2003/01**

(73) Patentinhaber: **Mitsubishi Polyester Film GmbH 65203 Wiesbaden (DE)**

(72) Erfinder:
• **MURSCHALL, Ursula**
 **55283 Nierstein (DE)**
• **KERN, Ulrich**
 **55218 Ingelheim (DE)**
• **CRASS, Günther**
 **65232 Taunusstein (DE)**
• **PEIFFER, Herbert**
 **55126 Mainz (DE)**
• **MAHL, Hans**
 **65369 Walluf (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(56) Entgegenhaltungen:
EP-A- 0 035 835        EP-A- 0 712 719
EP-A- 0 903 222        EP-A- 0 947 982
GB-A- 2 344 596

EP 1 268 205 B1

**Beschreibung**

Die Erfindung betrifft eine einseitig matte, siegelfähige, flammhemmend ausgerüstete, koextrudierte, biaxial orientierte Polyesterfolie bestehend aus mindestens einer Basisschicht B und beidseitig auf dieser Basisschicht aufgebrachten siegelfähigen Deckschicht A und matten Deckschicht C. Die Folie enthält zusätzlich mindestens ein Flammschutzmittel. Die Erfindung beinhaltet weiterhin ein Verfahren für die Herstellung der Folie und ihre Verwendung.

In der **GB-A 1 465 973** wird eine koextrudierte, zweischichtige Polyesterfolie beschrieben, deren eine Schicht aus isophthalsäurehaltigen und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nicht prozesssicher herstellbar (Folie ist nicht wickelbar) und nur unter Einschränkung weiterverarbeitbar.

In der **EP-A- 0 035 835** wird eine koextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Durch die teilchenförmigen Zusatzstoffen werden Oberflächenvorsprünge gebildet, die das unerwünschte Blocken und Kleben an Walzen oder Führungen verhindern. Über die andere, nicht siegelfähige Schicht der Folie, werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Siegelschicht und den in den Beispielen angegebenen Konzentrationen wird das Siegelverhalten der Folie verschlechtert. Angaben zum Siegeltemperaturbereich der Folie werden in der Schrift nicht gemacht. Die Siegelnahtfestigkeit wird bei 140 °C gemessen und liegt in einem Bereich von 63 bis 120 N/m (0,97 N/15 mm bis 1,8 N/15 mm Folienbreite).

In der **EP-A-0 432 886** wird eine koextrudierte mehrschichtige Polyesterfolie beschrieben, die eine erste Oberfläche besitzt, auf der eine siegelfähige Schicht angeordnet ist und eine zweite Oberfläche besitzt, auf der eine Acrylatschicht angeordnet ist. Die siegelfähige Deckschicht kann auch hier aus isophthalsäurehaltigen und terephthalsäurehaltigeh Copolyestern bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 μm dicke Siegelschicht wird eine Siegelnahtfestigkeit von 761,5 N/m (11,4 N/15 mm) angegeben. Nachteilig an der rückseitigen Acrylatbeschichtung ist, daß diese Seite gegen die siegelfähige Deckschicht nicht mehr siegelt. Die Folie ist damit nur sehr eingeschränkt zu verwenden.

In der **EP-A-0 515 096** wird eine koextrudierte, mehrschichtige siegelfähige Polyesterfolie beschrieben, die auf der siegelfähigen Schicht ein zusätzliches Additiv enthält. Das Additiv kann z.B. anorganische Partikel enthalten und wird vorzugsweise in einer wässrigen Schicht an die Folie bei deren Herstellung angetragen. Hierdurch soll die Folie die guten Siegeleigenschaften beibehalten und gut zu verarbeiten sein. Die Rückseite enthält nur sehr wenige Partikel, die hauptsächlich über das Regranulat in diese Schicht gelangen. Angaben zum Siegeltemperaturbereich der Folie werden auch in dieser Schrift nicht gemacht. Die Siegelnahtfestigkeit wird bei 140 °C gemessen und beträgt mehr als 200 N/m (3 N/15 mm). Für eine 3 μm dicke Siegelschicht wird eine Siegelnahtfestigkeit von 275 N/m (4,125 N/15 mm) angegeben.

In der **WO 98/06575** wird eine koextrudierte mehrschichtige Polyesterfolie beschrieben, die eine siegelfähige Deckschicht und eine nicht siegelfähige Basisschicht enthält. Die Basisschicht kann dabei aus einer oder mehreren Schichten aufgebaut sein, wobei die innere der Schicht mit der siegelfähigen Schicht in Kontakt ist. Die andere (äußere) Schicht bildet dann die zweite nicht siegelfähige Deckschicht. Die siegelfähige Deckschicht kann auch hier aus isophthalsäurehaltigen und terephthalsäurehaltigen Copolyestern bestehen, die jedoch keine Antiblockteilchen enthalten. Die Folie enthält außerdem noch mindestens einen UV-Absorber, der der Basisschicht in einem Gewichtsverhältnis von 0,1 bis 10 % zugegeben wird. Die Basisschicht ist mit üblichen Antiblockmitteln ausgestattet. Die Folie zeichnet sich durch eine gute Siegelfähigkeit aus, hat jedoch nicht das gewünschte Verarbeitungsverhalten und weist zudem Defizite in den optischen Eigenschaften auf. Die Folie kann zudem eine matte Oberfläche aufweisen, sie besitzt dann aber eine hohe Trübung, die unerwünscht ist.

In der **DE-AS 23 46 787** ist ein schwerentflammbarer Rohstoff beschrieben. Neben dem Rohstoff ist auch die Verwendung des Rohstoffs zu Folien und Fasern beansprucht. Bei der Herstellung von Folie mit diesem beanspruchten phospholanmodifizierten Rohstoff zeigten sich folgende Defizite

- Der genannte Rohstoff ist hydrolyseempfindlich und muß sehr gut vorgetrocknet werden. Beim Trocknen des Rohstoffes mit Trocknern, die dem Stand der Technik entsprechen, verklebt der Rohstoff, so daß nur unter schwierigsten Bedingungen eine Folie herstellbar ist.
- Die unter unwirtschaftlichen Bedingungen hergestellten Folien verspröden bei Temperaturbelastungen, d.h. die mechanischen Eigenschaften gehen aufgrund der Versprödung stark zurück, so daß die Folie unbrauchbar ist. Bereits nach 48 Stunden Temperaturbelastung tritt diese Versprödung auf.

Aufgabe der vorliegenden Erfindung ist es, die Nachteile des Standes der Technik zu vermeiden.

Gegenstand der Erfindung ist eine einseitig matte, siegelfähige, flammhemmend ausgerüstete, koextrudierte, biaxial orientierte Polyesterfolie mit mindestens einer Basisschicht B, einer siegelfähigen Deckschicht A und einer weiteren matten Deckschicht C, wobei in mindestens einer Schicht ein Flammschutzmittel enthalten ist und wobei die siegelfähige Deckschicht A eine Siegelanspringtemperatur von 110 °C und eine Siegelnahtfestigkeit von mindestens 1,3 N/15 mm aufweist und die Topographien der beiden Deckschichten A und C folgende Merkmale besitzen

Siegelfähige Deckschicht A:

- $R_a$-Wert< 30 nm
- Messwert der Gasströmung 500 - 4000 s

Nicht siegelfähige, matte Deckschicht C:

- 200 nm < $R_a$ < 1000 nm
- Messwert der Gasströmung < 50 s

Somit wird eine einseitig matte, siegelfähige, transparente, flammhemmend ausgerüstete, siegelfähige, koextrudierte und biaxial orientierte Polyesterfolie bereitgestellt, die die Nachteile der genannten Folien nach dem Stand der Technik nicht aufweist und sich insbesondere durch eine sehr gute Siegelfähigkeit, eine wirtschaftliche Herstellung, eine verbesserte Verarbeitbarkeit und verbesserten optischen Eigenschaften auszeichnet. Vor allem weist sie eine flammhemmende Wirkung und keine Versprödung nach Temperaturbelastung auf.

Es ist gelungen, den Siegelbereich der Folie auf niedrige Temperaturen zu erweitern, die Siegelnahtfestigkeit der Folie zu erhöhen und gleichzeitig für ein verbessertes Handling der Folie zu sorgen als es nach dem Stand der Technik bekannt ist. Außerdem ist gewährleistet, daß die Folie auch auf schnellaufenden Verarbeitungsmaschinen verarbeitet werden kann. Bei der Herstellung der Folie kann immanent anfallendes Regenerat in einer Konzentration bis zu 60 Gew.-%, bezogen auf das Gesamtgewicht der Folie, der Extrusion zugeführt werden, ohne daß dabei die physikalischen Eigenschaften der Folie nennenswert negativ beeinflußt werden.

Eine flammhemmende Wirkung bedeutet, daß die transparente Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Desweiteren soll die Folie den UL-Test 94 "Vertical Burning Test for Flammability of Plastic Material" bestehen, so daß sie in die Klasse 94 VTM-0 eingestuft werden kann. Das bedeutet, daß die Folie 10 Sekunden nach Wegnahme des Bunsenbrenners nicht mehr brennt, nach 30 Sekunden kein Glühen beobachtet wird und auch kein Abtropfen festgestellt wird.

Zu der wirtschaftlichen Herstellung zählt, daß die Rohstoffe bzw. die Rohstoffkomponenten, die zur Herstellung der schwer entflammbaren Folie benötigt werden, mit Industrietrockner, die dem Standard der Technik genügen, getrocknet werden können. Wesentlich ist, daß die Rohstoffe nicht verkleben und nicht thermisch abgebaut werden. Zu diesen Industrietrocknern nach dem Stand der Technik zählen Vakuumtrockner, Wirbelschichttrockner, Fließbetttrockner und Festbetttrockner (Schachttrockner).

Diese Trockner arbeiten bei Temperaturen zwischen 100 und 170 °C, wo die bisher eingesetzten flammhemmend ausgerüsteten Rohstoffe nach dem Stand der Technik im allgemeinen verkleben und bergmännisch abgebaut werden müssen, so daß keine Folienherstellung möglich ist.

Bei dem am schonendsten trocknenden Vakuumtrockner durchläuft der Rohstoff einen Temperaturbereich von ca. 30 °C bis 130 °C bei einem vermindertem Druck von 50 mbar. Danach ist ein sog. Nachtrocknen in einem Hopper bei Temperaturen von 100 - 130 °C und einer Verweilzeit von 3 bis 6 Stunden erforderlich. Selbst hier verklebt der bisher eingesetzte Rohstoff extrem.

Keine Versprödungen bei kurzer Temperaturbelastung bedeutet, daß die Folie nach 100 Stunden Tempervorgang bei 100 °C in einem Umluftofen keine Versprödung und keine schlechten mechanischen Eigenschaften aufweist.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Erfindungsgemäß ist die Folie im allgemeinen zumindest dreischichtig und umfaßt dann als Schichten die Basisschicht B, die siegelfähige Deckschicht A und die matte Deckschicht C.

Die Basisschicht B der Folie besteht im allgemeinen zu mindestens 90 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethyl-cyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'-dicarbonsäure (= Polyethylen-2,6-naphthalatbibenzoat, PENBB). Besonders bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohekandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, $-O-$, $-S-$ oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die $(C_3-C_{19})$ Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus:

Die durch Koextrusion auf die Basisschicht B aufgebrachte siegelfähige Deckschicht A ist auf Basis von Polyestercopolymeren aufgebaut und besteht im wesentlichen aus amorphen Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen öder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil än Ethylenterephthalat 50 bis 90 Mol-% und der entsprechende Anteil an Ethylenisophthalat 50 bis 10 Mol-% beträgt und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Die matte Deckschicht C enthält in ihrer bevorzugten Ausführungsform ein Blend oder eine Mischung aus zwei Komponenten I und II und gegebenenfalls zugesetzte Additive in Form von inerten anorganischen Antiblockmitteln.

Die Komponente I der Mischung beziehungsweise des Blends ist ein Polyethylenterephthalat-Homopolymer oder Polyethylenterephthalat Copolymer oder eine Mischung aus Polyethylenterephthalat Homo- oder Copolymeren.

Die Komponente II des Copolymers oder der Mischung beziehungsweise des Blends ist ein Polyethylenterephthalat-Copolymer, welches aus dem Kondensationsprodukt der folgenden Monomeren beziehungsweise deren zur Bildung von Polyestern befähigten Derivaten besteht:

A) 65 bis 95 Mol-% Isophthalsäure;

B) 0 bis 30 Mol-% wenigstens einer aliphatische Dicarbonsäure mit der Formel $HOOC(CH_2)_nCOOH$, wobei n im Bereich von 1 bis 11 liegt;

C) 5 bis 15 Mol-% wenigstens eines Sulfomonomeren enthaltend eine Alkalimetallsulfonatgruppe an dem aromatischen Teil einer Dicarbonsäure;

D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente II bildenden Monomeren. Zur ausführlichen Beschreibung der Komponente II siehe auch die **EP-A-0 144 878,** auf die hier ausdrücklich Bezug genommen wird.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, daß die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Das Verhältnis (Gewichtsverhältnis) der beiden Komponenten I und 11 der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise von I:II = 20:80 bis I:II = 95:5 und insbesondere von I:II =30:70 bis I:II =95:5.

Die gewünschten Siegeleigenschaften, den gewünschten Mattheitsgrad und die gewünschten Verarbeitungseigenschaften der erfindungsgemäßen Folie werden aus der Kombination der Eigenschaften des verwendeten Copolyesters für die siegelfähige Deckschicht und den Topographien der siegelfähigen Deckschicht A und der nicht siegelfähigen, matten Deckschicht C erhalten.

Die Siegelanspringtemperatur von 110 °C und der Siegelnahtfestigkeit von mindestens 1,3 N/15mm wird erreicht, wenn für die siegelfähige Deckschicht A die oben näher beschriebenen Copolymeren verwendet werden. Die besten Siegeleigenschaften der Folie erhält man, wenn dem Copolymeren keine weiteren Additive, insbesondere keine anorganische oder organische Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie schlecht, da die Oberfläche der siegelfähigen Deckschicht A stark zum Verblocken neigt. Die Folie läßt sich kaum wickeln und ist für eine Weiterverarbeitung auf schnelllaufenden Verpackungsmaschinen nicht geeignet. Zur Verbesserung des Handlings der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblocken minimiert und andererseits die Siegeleigenschaften nur unwesentlich verschlechtert werden. Diese gewünschte Eigenschaftskombination läßt sich erreichen, wenn die Topographie der siegelfähigen Deckschicht A durch den folgenden Satz von Parametern gekennzeichnet ist:

- Die Rauhigkeit der siegelfähigen Deckschicht, gekennzeichnet durch den $R_a$-Wert, ist im allgemeinen kleiner als 30 nm, vorzugsweise kleiner als 25 nm. Im anderen Fall werden die Siegeleigenschaften im Sinne der vorliegenden Erfindung negativ beeinflusst.
- Der Messwert der Gasströmung soll im Bereich von 500-4000 s, vorzugsweise von 600 - 3500 s liegen. Bei Werten unterhalb von 500 s werden die Siegeleigenschaften im Sinne der vorliegenden Erfindung negativ beeinflusst und bei Werten oberhalb von 4000 s wird das Handling der Folie schlecht.

Die nicht siegelfähige, matte Deckschicht C wird durch den folgenden Satz von Parametern gekennzeichnet

- Die Rauhigkeit der matten Deckschicht, gekennzeichnet durch den $R_a$-Wert, liegt im Bereich von 200 - 1000 nm, vorzugsweise 220 - 900 nm. Kleinere Werte als 200 nm haben negative Auswirkungen auf das Wickel- und Verarbeitungsverhalten der Folie, sowie auf den Mattheitsgrad der Oberfläche. größerer Werte als 1000 nm beeinträchtigen die optischen Eigenschaften (Trübung) der Folie.
- Der Messwert der Gasströmung sollte im Bereich ≤ 50 s, vorzugsweise ≤ 45 s liegen. Bei Werten oberhalb von 50 wird der Mattigkeitsgrad der Folie negativ beeinflusst.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Des weiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, daß die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Daher war es mehr als überraschend, daß mittels Masterbatch-Technologie, einer geeigneten Vortrocknung und/oder Vorkristallisation und gegebenenfalls Einsatz von geringen Mengen eines Hydrolysestabilisators eine schwerentflammbare Folie mit dem geforderten Eigenschaftsprofil wirtschaftlich und ohne Verklebung im Trockner herstellbar ist und daß die Folie nach Temperaturbelastung nicht versprödet Desweiteren wurden keine Ausgasungen und Ablagerungen im Produktionsprozess gefunden.

Sehr überraschend war, daß bei diesem hervorragenden Resultat Und dem geforderten Flammschutz

- Der Gelbwert der Folie im Vergleich zu einer nicht ausgerüsteten Folie im Rahmen der Meßgenauigkeit nicht negativ beeinflußt ist.
- Keine Ausgasungen, keine Düsenablagerungen, keine Rahmenausdampfungen auftreten, wodurch die Folie eine exzellente Optik aufweist und ein ausgezeichnetes Profil und eine hervorragende Planlage hat.
- Sich die schwerentflammbare Folie durch einen hervorragende Streckbarkeit auszeichnet, so daß sie verfahrenssicher und stabil auf high speed film lines bis zu Geschwindigkeiten von 420 m/min produktionssicher hergestellt werden kann.

Damit ist eine solche Folie auch wirtschaftlich rentabel.

Desweiteren ist sehr überraschend, daß auch das aus den Folien beziehungsweise den Formkörpern erzeugte Regenerat wieder einsetzbar ist, ohne den Gelbwert der Folie negativ zu beeinflussen.

In einer bevorzugten Ausführungsform enthält die Folie gemäß der Erfindung als Hauptbestandteil ein kristallisierbares Polyethylenterephthalat, 1,0 bis 20,0 Gew.-% einer im Polyethylenterephthalat löslichen organischen Phosphorverbindung als Flammschutzmittel und 0,1 Gew.-% bis 1,0 Gew.-% eines Hydrolysestabilisators.

Besonders geeignet sind phenolische Stabilisatoren, Alkali-/Erdalkalistearate und/oder Alkali-/Erdalkalicarbonate. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

In der dreischichtigen Ausführungsform ist das Flammschutzmittel vorzugsweise in der nicht siegelfähigen Deckschicht C enthalten. Jedoch kann nach Bedarf auch die Basisschicht B oder auch die siegelfähige Deckschicht A mit Flammschutzmitteln ausgerüstet sein. Die Konzentration des oder der Flammschutzmittels(n) bezieht sich dabei auf das Gewicht der Thermoplasten in der mit Flammschutzmitteln ausgerüsteten Schicht.

Ganz überraschend haben Brandschutzversuche nach DIN 4102 und dem UL-Test gezeigt, daß es im Falle einer dreischichtigen Folie durchaus ausreichend ist, die 0,3 bis 2,5 μm dicken Deckschichten mit Flammschutzmittel auszurüsten, um eine verbesserte Flammhemmung zu erreichen. Bei Bedarf und bei hohen Brandschutzanforderungen kann auch die Kemschicht mit Flammschutzmittel ausgerüstet sein, d.h. eine sogenannte Grundausrüstung beinhalten.

Dadurch werden die mit der bekannten Koextrusionstechnologie hergestellten schwer entflammbaren, mehrschichtigen Folien im Vergleich zu den komplett in hohen Konzentrationen ausgerüsteten Monofolien wirtschaftlich interessant, da deutlich weniger Flammschutzmittel benötigt wird.

Darüber hinaus ergaben Messungen, daß die Folie gemäß der Erfindung bei Temperaturbelastungen von 100 °C über einen längeren Zeitraum nicht versprödet, was mehr als überraschend ist. Dieses Resultat ist auf die synergistische Wirkung von geeigneter Vorkristallisation, Vortrocknung, Masterbatch-Technologie und Hydrolysestabilisator zurückzuführen.

Desweiteren ist die Folie ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz gewünscht wird, eignet.

Überraschenderweise erfüllen schon Folien gemäß der Erfindung im Dickenbereich 5 - 300 μm die Baustoffklassen B2 und B1 nach DIN 4102 und dem UL-Test 94.

Gemäß der Erfindung wird das Flammschutzmittel über die Masterbatch-Technologie zugegeben. Das Flammschutzmittel und gegebenenfalls der Hydrolysestabilisator werden zunächst in einem Trägermaterial voll dispergiert. Als Trägermaterial kommen der Thermoplast selbst, z.B. das Polyethylenterephthalat oder auch andere Polymere, die mit dem Thermoplasten verträglich sind, in Frage. Nach der Zudosierung zu dem Thermoplasten für die Folienherstellung schmelzen die Bestandteile des Masterbatches während der Extrusion und werden so in dem Thermoplasten gelöst.

Wichtig bei der Masterbatch-Technologie ist, daß die Korngröße und das Schüttgewicht des Masterbatches ähnlich der Komgröße und dem Schüttgewicht des Thermoplasten ist, so daß eine homogene Verteilung und damit eine homogene Schwerentflammbarkeit erfolgen kann.

Erfindungswesentlich ist, daß das Masterbatch, welches das Flammschutzmittel enthält, vorkristallisiert bzw.

vorgetrocknet wird. Diese Vortrocknung beinhaltet ein gradielles Erhitzen des Masterbatches unter reduziertem Druck (20 bis 80 mbar, vorzugsweise 30 bis 60 mbar, insbesondere 40 bis 50 mbar) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Die Basisschicht B kann zusätzlich übliche Additive, wie Stabilisatoren und/oder Antiblockmittel enthalten. Auch die beiden anderen Schichten A und C können diese Zusätze enthalten. Sie werden zweckmäßig dem Polymer beziehungsweise der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Antiblockmittel können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden.

Bevorzugte Partikel sind $SiO_2$ in kolloidaler und in kettenartiger Form. Diese Partikel werden sehr gut in die Polymermatrix eingebunden und erzeugen nur geringfügig Vakuolen. Vakuolen verursachen im allgemeinen Trübung und sind daher zweckmäßiger Weise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm und besonders bevorzugt kleiner als 50 nm und/oder Teilchen mit einem mittleren Primärpartikeldurchmesser von größer als 1 μm, bevorzugt größer als 1,5 μm und besonders bevorzugt größer als 2 μm zu verwenden. Diese zuletzt beschriebenen Teilchen sollten jedoch keinen mittleren Partikeldurchmesser aufweisen, der größer ist als 5 μm.

Zur Erzielung der vorgenannten Eigenschaften der siegelfähigen Folie hat es sich als zweckmäßig erwiesen, die Partikelkonzentration in der Basisschicht B niedriger zu wählen als in den beiden Deckschichten A und C. Bei einer dreischichtigen Folie vom genannten Typ wird in der Basisschicht B die Partikelkonzentration im Bereich von 0 bis 0,15 Gew.-%, vorzugsweise von 0,001 bis 0,12 Gew.-% und insbesondere von 0,002 bis 0,10 Gew.-% liegen. Der Partikeldurchmesser der eingesetzten Teilchen ist prinzipiell nicht eingeschränkt, jedoch sind Teilchen mit einem mittleren Durchmesser von größer 1 mm besonders bevorzugt.

In der vorteilhaften Verwendungsform besteht die Folie aus drei Schichten, der Basisschicht B und beidseitig auf dieser Basisschicht aufgebrachten Deckschichten A und C, wobei die Deckschicht A gegen sich selbst und gegen die Deckschicht C siegelfähig ist.

Zur Erzielung des genannten Eigenschaftsprofils der Folie weist die Deckschicht C mehr Pigmente (d.h. höhere Pigmentkonzentration) als die Deckschicht A auf. Die Pigmentkonzentration in dieser zweiten, matten Deckschicht C liegt im Bereich von 1,0 bis 10,0 %, vorteilhaft von 1,5 bis 10 % und insbesondere von 2,0 bis 10 %. Die andere, der Deckschicht C gegenüberliegenden, siegelfähige Deckschicht A ist dagegen weniger mit inerten Pigmenten gefüllt. Die Konzentration der inerten Partikeln in der Schicht A liegt im Bereich von 0,01 bis 0,2 Gew.-%, vorzugsweise von 0,015 bis 0,15 Gew.-% und insbesondere von 0,02 bis 0,1 Gew.-%.

Zwischen der Basisschicht und den Deckschichten kann sich gegebenenfalls noch eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polyester. Sie kann auch die beschriebenen üblichen Additive enthalten. Die Dicke der Zwischenschicht ist im allgemeinen größer als 0,3 μm und liegt vorzugsweise im Bereich von 0,5 bis 15,0 μm, insbesondere im Bereich von 1,0 bis 10,0 μm und ganz bevorzugt im Bereich von 1,0 bis 5,0 μm.

Bei der besonders vorteilhaften dreischichtigen Ausführungsform der Folie gemäß der Erfindung ist die Dicke der Deckschichten A und C im allgemeinen größer als 0,1 μm und liegt allgemein im Bereich von 0,2 bis 4,0 μm, vorteilhaft von 0,2 bis 3,5 μm, insbesondere von 0,3 bis 3 μm und ganz besonders bevorzugt von 0,3 bis 2,5 μm, wobei die Deckschichten A und C gleich oder verschieden dick sein können.

Die Gesamtdicke der Folie gemäß der Erfindung kann innerhalb bestimmter Grenzen variieren. Sie beträgt

3 bis 100 μm, insbesondere 4 bis 80 μm, vorzugsweise 5 bis 70 μm, wobei die Schicht B einen Anteil von vorzugsweise 5 bis 90 % an der Gesamtdicke hat.

Die Polymere für die Basisschicht B und die beiden Deckschichten A und C werden drei Extrudern zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die Folie gemäß der Erfindung wird im allgemeinen nach dem an sich bekannten Koextrusionsverfahren hergestellt.

Im Rahmen dieses Verfahrens wird so vorgegangen, daß die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird, wie beim Koextrusionsverfahren üblich, das Polymere beziehungsweise die Polymermischung der einzelnen Schichten in einem Extruder komprimiert und verflüssigt, wobei die gegebenenfalls zugesetzten Additive bereits im Polymer beziehungsweise in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren inline beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Für die Herstellung einer Folie mit sehr guten Siegeleigenschaften hat es sich als günstig erwiesen, wenn die planare Orientierung $\Delta p$ der Folie kleiner ist als $\Delta p = 0,165$, besonders aber kleiner ist als $\Delta p = 0,163$. In diesem Fall ist die Festigkeit der Folie in Dickenrichtung so groß, daß bei der Messung der Siegelnahtfestigkeit definitiv die Siegelnaht aufgetrennt wird und die Folie nicht einreißt und weiterreißt.

Es hat sich herausgestellt, daß die wesentlichen Einflußgrößen auf die planare Orientierung $\Delta p$ die Verfahrensparameter in der Längsstreckung und in der Querstreckung sind, sowie der SV-Wert des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p = 0,167$ mit dem Parametersatz $\lambda_{MD} = 4,8$ und $\lambda_{TD} = 4,0$ , die Strecktemperaturen in Längs- und in Querrichtung $T_{MD} = 80 - 118$ °C und $T_{TD} = 80 - 125$ °C, so erhält man durch Erhöhung der Längsstrecktemperatur auf $T_{MD} = 80 - 125$ °C oder durch Erhöhung der Querstrecktemperatur auf $T_{TD} = 80 - 135$ °C oder durch Absenkung des Längsstreckverhältnisses auf $\lambda_{MD} = 4,3$ oder durch Absenkung des Querstreckverhältnisses auf $\lambda_{TD} = 3,7$ eine planare Orientierung $\Delta p$, die im gewünschten Bereich liegt. Die Folienbahngeschwindigkeit betrug hierbei 340 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich bei der Längsstreckung auf die jeweiligen Walzentemperaturen und bei der Querstreckung auf die Folientemperaturen, die mittels Infrarot gemessen wurden.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von über 45 mN/m.

Zur Einstellung weiterer gewünschter Eigenschaften kann die Folie zusätzlich beschichtet werden. Typische Beschichtungen sind haftvermittelnde, antistatisch, schlupfverbessemd oder dehäsiv wirkende Schichten. Es bietet sich an, diese zusätzlichen Schichten über inline coating mittels wässriger Dispersionen vor dem Streckschritt in Querrichtung auf die Folie aufzubringen.

Die Folie gemäß der Erfindung zeichnet sich durch eine hervorragende Siegelfähigkeit, eine sehr gute flammhemmende Wirkung, ein sehr gutes Handling und durch ein sehr gutes Verarbeitungsverhalten aus. Bei der Folie siegelt die siegelfähige Deckschicht A nicht nur gegen sich selbst (fin sealing), sondern auch gegen die nicht siegelfähige Deckschicht C (lap sealing). Bei der lap sealing ist die Siegelanspringtemperatur lediglich um ca. 10 K nach oben verschoben und die Siegelnahtfestigkeit ist um nicht mehr als 0,3 N/15 mm verschlechtert.

Außerdem konnte die Mattheit bei gleichzeitiger Reduzierung der Trübung der Folie gegenüber Folien nach dem Stand der Technik verbessert werden. Bei der Herstellung der Folie ist gewährleistet, daß das Regenerat in einer Konzentration von 20 bis 60 Gew.-%, bezogen auf das Gesamtgewicht der Folie, wieder der Extrusion zugeführt werden kann, ohne daß dabei die physikalischen Eigenschaften der Folie nennenswert negativ beeinflußt werden.

Die Folie eignet sich auf Grund ihrer hervorragenden Siegeleigenschaften, auf Grund ihres sehr guten Handlings und auf Grund ihrer sehr guten Verarbeitungseigenschaften insbesondere für die Verarbeitung auf schnellaufenden Maschinen.

Darüber hinaus eignet sich die Folie auf Grund ihrer hervorragender Eigenschaftskombinationen für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor. Im Laden- und Regalbau, als Werbeartikel, Kaschiermedium, im Außenbereich für Gewächshäuser, Überdachungen, Außenverkleidungen, Abdeckungen von Materialien, wie Stahlblechen, Anwendungen im Bausektor und Lichtwerbeprofile, Schattenmatten, Elektroanwendungen.

Die Folien und daraus hergestellten Artikel eignen sich insbesondere für Außenanwendungen, wo ein Brandschutz beziehungsweise eine Schwerentflammbarkeit gefordert ist.

Die Deckschicht C zeichnet sich durch eine charakteristische matte, entspiegelnd wirkende Oberfläche aus, wodurch sie für die genannten Anwendungen besonders attraktiv wird.

Die nachstehende Tabelle (Tabelle 1) faßt die wichtigsten Eigenschaften der Folie gemäß der Erfindung zusammen.

## Tabelle 1

| | Bereich gemäß der Erfindung | bevorzugt | besonders bevorzugt | Einheit | Messmethode |
|---|---|---|---|---|---|
| **Deckschicht A** | | | | | |
| Siegelanspringtemperatur | <110 | <105 | <100 | °C | intern |
| Siegelnahtfestigkeit | >1,3 | >1,5 | >1,8 | N/15 mm | intern |
| Mittlere Rauhigkeit $R_a$ | <30 | <25 | <20 | nm | DIN 4768, Cut-off von 0,25 mm |
| Messwertbereich für die Gasströmung | 500-4000 | 800-3500 | 1000-3000 | sec | intern |
| Glanz, 20° | >120 | >130 | >140 | | DIN 67 530 |
| **Deckschicht C** | | | | | |
| COF | <0,5 | <0,45 | <0,40 | | DIN 53 375 |
| Mittlere Rauhigkeit $R_a$ | 200-1000 | 225-900 | 250-800 | nm | DIN 4768, Cut-off von 0,25 mm |
| Messwertbereich für die Gasströmung | <50 | <45 | <49 | sec | intern |
| Glanz, 60° | <60 | <55 | <50 | | DIN 67 530 |
| **weitere Folieneigenschaften** | | | | | |
| Trübung | <40 | <35 | <30 | % | ASTM-D 1003-52 |
| Planare Orientierung | <0,1650 | <0,163 | <0,160 | | intern |
| Brandverhalten | Die Folie erfüllt nach DIN 4102 Teil2/Teil1 die Baustoffklassen B2 und B1und besteht den UL-Test 94 | | | | |

In den nachfolgenden Ausführungsbeispielen erfolgt die Messung der einzelnen Eigenschaften gemäß der folgenden Normen bzw. Verfahren.

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}67 \cdot 10^{-4}\,SV \cdot (PCE) + 0{,}118$$

**Bestimmung der Siegelanspringtemperatur (Mindestsiegeltemperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.
Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

| Messbedingungen | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung $\Delta$p**

Die Bestimmung der planaren Orientierung erfolgt über die Messung der Brechungsindizes mit dem Abbe-Refraktometer nach der internen Betriebsvorschrift 24.

Probenvorbereitung

Probengröße und Probenlänge: 60 bis 100 mm
Probenbreite: entspricht Prismenbreite von 10 mm
Zur Bestimmung von $n_{MD}$ und $n_{\alpha}$ (=$n_z$) muß die zu messende Probe aus der Folie ausgeschnitten werden, bei der die Laufkante der Probe exakt mit der TD-Richtung übereinstimmen muß. Zur Bestimmung von $n_{TD}$ und $n_{\alpha}$ (=$n_z$) muß die zu messende Probe aus der Folie ausgeschnitten werden, bei der die Laufkannte der Probe exakt mit der MD-Richtung übereinstimmen muß. Die Proben sind aus der Mitte der Folienbahn zu entnehmen. Es ist dafür Sorge zu tragen, daß das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muß größer als 1,685 sein. Darauf wird zuerst die in TD-Richtung ausgeschnittene Probe aufgelegt, so daß die gesamte Prismenoberfläche bedeckt ist. Mit Hilfe eines Papiertaschentuches wird nun die Folie fest auf das Prisma aufgebügelt, so daß die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, daß nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Meßskala angezeigte Wert wird abgelesen und in das Meßprotokoll eingetragen. Dies ist der Brechungsindex in Maschinenrichtung $n_{MD}$. Nun wird die Skala mit der unteren Rändelschraube soweit verdreht, daß der im Okular sichtbare Bereich zwischen 1,49 und 1,50 zu sehen ist.
Jetzt wird der Brechungsindex in $n_{\alpha}$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so daß ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.
Anschließend wird die Probe gedreht und die entsprechenden Brechungsindizes $n_{MD}$ und $n_{\alpha}$ (=$n_z$) der anderen Oberflächenseite gemessen und in eine entsprechende Tabelle eingetragen.
Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_{\alpha}$ (= $n_z$ ) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Oberflächendefekte**

Die Oberflächendefekte werden visuell bestimmt.

**Mechanische Eigenschaften**

Der E-Modul, die Reißfestigkeit und die Reißdehnung werden in Längs- und Querrichtung nach ISO 527-1-2 gemessen.

**Gelbwert**

Der Gelbwert (YID) ist die Abweichung von der Farblosigkeit in Richtung "Gelb" und wird gemäß DIN 6167 gemessen. Gelbwerte von < 5 sind visuell nicht sichtbar.

**Brandverhalten**

Das Brandverhalten wird nach DIN 4102 Teil.2, Baustoffklasse B2 und nach DIN 4102 Teil 1, Baustoffklasse B1 sowie nach dem UL-Test 94 ermittelt.

**Beispiele**

Bei nachstehenden Beispielen und den Vergleichsbeispielen handelt es sich jeweils um Folien unterschiedlicher Dicke, die nach einem bekannten Extrusionsverfahren hergestellt werden.

**Beispiel 1**

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Ebenfalls wurden Chips aus Polyethylenterephthalat und einem Füllstoff dem Extruder für die nicht siegelfähige Deckschicht C zugeführt.

Daneben wurden Chips aus einem linearen Polyester hergestellt, der aus einem amorphen Copolyester mit 78 Mol.-% Ethylenterephthalat und 22 Mol-% Ethylenisophthalat besteht (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und dem Extruder für die siegelfähige Deckschicht A zugeführt.

Der Hydrolysestabilisator und das Flammschutzmittel werden in Form eines Masterbatches zudosiert. Das Masterbatch setzt sich aus 20 Gew.-% Flammschutzmittel, 1 Gew.-% Hydrolysestabilisator und 79 Gew.-% Polyethylenterephthalat zusammen. Bei dem Hydrolysestabilisator handelt es sich um Pentaerythrityl-Tetrakis-3-(3,5-di-Tertiärbutyl-4-Hydroxylphenyl)-Propionat . Bei dem Flammschutzmittel handelt es sich um Dimethylphosphonat (®Armgard P 1045). Das Masterbatch hat ein Schüttgewicht von 750 kg/m$^3$ und einen Erweichungspunkt von 69 °C.

Das Masterbatch wurde bei Raumtemperatur aus separaten Dosierbehältern in einem Vakuumtrockner gefüllt, der von dem Einfüllzeitpunkt bis zum.Ende der Verweilzeit ein Temperaturspektrum von 25 °C bis 130 °C durchläuft. Während der ca. 4-stündigen Verweilzeit wird das Masterbatch mit 61 Upm gerührt. Das vorkristallisierte bzw. vorgetrocknete Masterbatch wird in dem nachgeschalteten, ebenfalls unter vermindertem Druck stehenden Hopper bei 140 °C 4 Stunden nachgetrocknet.

Der Basisschicht B werden 10 Gew.-% des Masterbatches und der nicht siegelfähigen Deckschicht C 20 Gew.-% des Masterbatches zugegeben.

Es wurde durch Koextrusion und anschließende stufenweise Orientierung in Längs- und Querrichtung eine transparente dreischichtige Folie mit ABC-Aufbau und einer Gesamtdicke von 12 μm hergestellt. Die Dicke der jeweiligen Deckschichten ist der Tabelle 2 zu entnehmen.

| Deckschicht A, Mischung aus: | |
|---|---|
| 97,0 Gew.-% | Copolyester mit einem SV-Wert von 800 |

(fortgesetzt)

| Deckschicht A, Mischung aus: | |
|---|---|
| 3,0 Gew.-% | Masterbatch aus 97,75 Gew.-% Copolyester (SV-Wert von 800) und 1,0 Gew.-% ®Sylobloc 44 H (synthetisches $SiO_2$ der Fa. Grace) und 1,25 Gew.-% ®Aerosil TT 600 (pyrogenes $SiO_2$ der Fa. Degussa) |

| Basisschicht B: | |
|---|---|
| 90,0 Gew.-% | Polyethylenterephthalat mit einem SV-Wert von 800 |
| 10,0 Gew.-% | Masterbatch, welches Flammschutzmittel und Hydrolysestabilisator enthält |

| Deckschicht C, Mischung aus: | |
|---|---|
| 20,0 Gew.-% | Masterbatch, welches Flammschutzmittel und Hydrolysestabilisator enthält |
| 65,0 Gew.-% | Polyethylenterephthalat mit einem SV-Wert von 800 (=Komponente I) |
| 15,0 Gew.-% | Komponente II |

Die Komponente II wurde, wie in Beispiel 1 der **EP-A-0 144 878** näher beschrieben, hergestellt.

Die Herstellungsbedingungen in den einzelnen Verfahrensschritten waren:

| Extrusion | Temperaturen | A-Schicht | 270 °C |
|---|---|---|---|
| | | B-Schicht | 290 °C |
| | | C-Schicht | 290 °C |
| | Düsenspaltweite | | 2,5 mm |
| | Temperatur der Abzugswalze | | 30 °C |
| Längsstreckung | Temperatur | | 80 - 125°C |
| | Längsstreckverhältnis | | 4,2 |
| Querstreckung | Temperatur | | 80 - 135 °C |
| | Querstreckverhältnis | | 4,0 |
| Fixierung | Temperatur | | 230 °C |
| Dauer | | | 3 s |

Die Folie hatte die geforderten guten Siegeleigenschaften, die gewünschte Mattheit und zeigt das gewünschte Handling und das gewünschte Verarbeitungsverhalten. Der Folienaufbau und die erzielten Eigenschaften derart hergestellter Folien sind in den Tabellen 2 und 3 dargestellt.

Nach 200 Stunden Tempern bei 100°C im Umlufttrocknerschrank sind die mechanischen Eigenschaften unverändert. Die Folie zeigt keinerlei Versprödungserscheinungen. Die Folie erfüllt nach DIN 4102 Teil 2 und Teil 1 die Baustoffklassen B2 und B1. Die Folie besteht den UL-Test 94.

**Beispiel 2**

Im Vergleich zu Beispiel 1 wurde die Deckschichtdicke der siegelfähigen Schicht A von 1,5 auf 2,0 μm angehoben. Die Siegeleigenschaften haben sich hierdurch verbessert, insbesondere ist die Siegelnahtfestigkeit deutlich größer geworden.

**Beispiel 3**

Im Vergleich zu Beispiel 1 wurde jetzt eine 20 μm dicke Folie produziert. Die Deckschichtdicke der siegelfähigen Schicht A betrug 2,5 μm und diejenige der nicht siegetfähigen Schicht C betrug 2,0 μm. Die Siegeleigenschaften haben sich hierdurch nochmals verbessert, insbesondere ist die Siegelnahtfestigkeit deutlich größer geworden. Das Handling der Folie hat sich dabei tendenziell verbessert.

**Beispiel 4**

Im Vergleich zu Beispiel 3 wurde das Copolymere für die siegelfähige Deckschicht A geändert. Anstelle des amorphen Copolyesters mit 78 Mol.-% Polyethylenterephthalat und 22 Mol-% Ethylenterephthalat wurde jetzt ein amorpher Copolyester mit 70 Mol.-% Polyethylenterephthalat und 30 Mol-% Ethylenterephthalat verwendet. Der Rohstoff wurde auf einem Zweischneckenextruder mit Entgasung verarbeitet, ohne daß er vorgetrocknet werden musste. Die Deckschichtdicke der siegelfähigen Schicht A betrug wiederum 2,5 μm und diejenige der nicht siegelfähigen Schicht C betrug 2,0 μm. Die Siegeleigenschaften haben sich hierdurch verbessert, insbesondere ist die Siegelnahtfestigkeit deutlich größer geworden. Zur Erzielung eines guten Handlings und eines guten Verarbeitungsverhalten der Folie wurde die Pigmentkonzentration in den beiden Deckschichten leicht angehoben.

**Vergleichsbeispiel 1**

Im Vergleich zu Beispiel 1 wurde jetzt die siegelfähige Deckschicht A nicht pigmentiert. Die Siegeleigenschaften haben sich zwar hierdurch etwas verbessert, jedoch ist das Handling der Folie und das Verarbeitungsverhalten inakzeptabel schlechter geworden.

**Vergleichsbeispiel 2**

Im Vergleich zu Beispiel 1 wurde jetzt die siegelfähige Deckschicht A so hoch pigmentiert wie die nicht siegelfähige Deckschicht C. Das Handling und die Verarbeitungseigenschaften der Folie haben sich durch diese Maßnahme verbessert, jedoch sind die Siegeleigenschaften deutlich schlechter geworden.

**Vergleichsbeispiel 3**

Im Vergleich zu Beispiel 1 wurde jetzt die nicht siegelfähige Deckschicht A deutlich weniger pigmentiert. Das Handling der Folie und das Verarbeitungsverhalten der Folie ist deutlich schlechter geworden.

**Vergleichsbeispiel 4**

Es wurde Beispiel 1 aus der **EP-A-0 035 835** nachgearbeitet. Das Siegelverhalten der Folie, das Handling der Folie und das Verarbeitungsverhalten der Folie ist schlechter als bei den Beispielen gemäß der Erfindung.

## Tabelle 2

| Bei-spiel | Folien-dicke µm | Folien-aufbau | Schichtdicken µm | | | Pigmente in den Schichten | | | mittlerer Pigment-Durchmesser in Schichten µm | | | Pigment-konzentrationen ppm | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 1,5 | Sylobloc 44 H / Aerosil TT 600 | kein | 0 | 2,5 / 0,04 | | 2,5 / 0,04 | 300 / 375 | 0 | 0 |
| B 2 | 12 | ABC | 2,0 | 8,5 | 1,5 | Sylobloc 44 H / Aerosil TT 600 | kein | 0 | 2,5 / 0,04 | | 2,5 / 0,04 | 300 / 375 | 0 | 0 |
| B 3 | 20 | ABC | 2,5 | 15,5 | 2,0 | Sylobloc 44 H / Aerosil TT 600 | kein | 0 | 2,5 / 0,04 | | 2,5 / 0,04 | 300 / 375 | 0 | 0 |
| B 4 | 20 | ABC | 2,5 | 15,5 | 2,0 | Sylobloc 44 H / Aerosil TT 600 | kein | 0 | 2,5 / 0,04 | | 2,5 / 0,04 | 400 / 500 | 0 | 0 |
| VB 1 | 12 | ABC | 1,5 | 9 | 1,5 | kein | kein | Sylobloc 44 H / Aerosil TT 600 | | | 2,5 / 0,04 | | 0 | 1200 / 1500 |
| VB 2 | 12 | ABC | 1,5 | 9 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 1200 / 1500 |
| VB 3 | 12 | ABC | 1,5 | 9 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 600 / 750 |
| VB 4 | 15 | AB | 2,25 | 12,75 | | Gasil 35 / EP-A 035 835 | kein | | 3 | | | 2500 | 0 | |

EP 1 268 205 B1

## Tabelle 3

| Bei-spiel | Siegel-anspring-temperatur A-Seite gegen A-Seite | Siegel-naht-festigkeit A-Seite gegen A-Seite | Reibung COF C-Seite gegen C-Seite | Mittlere Rauhigkeit $R_a$ | | Messwerte für die Gasströmung | | $\Delta p$ | Glanz | | Trü-bung | Wickel-verhalten und Handling | Verar-beitungs-verhalten |
|---|---|---|---|---|---|---|---|---|---|---|---|---|---|
| | | | | A-Seite | C-Seite | A-Seite | C-Seite | | A-Seite | C-Seite | | | |
| B 1 | 100 | 2,0 | 0,45 | 25 | 340 | 1200 | 20 | 0,165 | 140 | 50 | 32 | ++ | ++ |
| B 2 | 98 | 2,7 | 0,45 | 26 | 340 | 1280 | 20 | 0,165 | 140 | 50 | 32 | ++ | ++ |
| B 3 | 95 | 3,0 | 0,41 | 23 | 340 | 1110 | 20 | 0,165 | 130 | 45 | 34 | ++ | ++ |
| B 4 | 85 | 3,3 | 0,40 | 23 | 340 | 1300 | 20 | 0,165 | 130 | 45 | 34 | ++ | ++ |
| VB 1 | 98 | 2,1 | 0,45 | 10 | 65 | 10000 | 80 | 0,165 | 160 | 170 | 1,5 | - | - |
| VB 2 | 110 | 1,0 | 0,45 | 65 | 65 | 80 | 80 | 0,165 | 130 | 170 | 2,8 | - | - |
| VB 3 | 100 | 2,0 | 0,45 | 25 | 37 | 1200 | 150 | 0,165 | 160 | 190 | 1,5 | - | - |
| VB 4 | 115 | 0,97 | >2 | 70 | 20 | 50 | >5000 | | | | 12 | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

-: Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

**EP 1 268 205 B1**

**Patentansprüche**

1. Einseitig matte, siegelfähige, flammhemmend ausgerüstete, koextrudierte, biaxial orientierte Polyesterfolie mit mindestens einer Basisschicht B auf Basis eines thermoplastischen Polyesters, einer siegelfähigen Deckschicht A und einer weiteren matten Deckschicht C, wobei in mindestens einer Schicht ein Flammschutzmittel enthalten ist, **dadurch gekennzeichnet, daß** die siegelfähige Deckschicht A eine Siegelanspringtemperatur von 110 °C und eine Siegelnahtfestigkeit von mindestens 1,3 N/15 mm aufweist und die Topographien der beiden Deckschichten A und C folgende Merkmale besitzen
   Siegelfähige Deckschicht A:

   - $R_a$-Wert< 30 nm
   - Messwert der Gasströmung 500 - 4000 s

   Nicht siegelfähige, matte Deckschicht C:

   - 200 nm < $R_a$ < 1000 nm
   - Messwert der Gasströmung < 50 s.

2. Folie nach Anspruch 1, **dadurch gekennzeichnet, daß** die siegelfähige Deckschicht A einen amorphen Copolyester enthält, der aus Ethylenterephthalat- und Ethylenisophthalat-Einheiten und aus Ethylenglykol-Einheiten aufgebaut ist.

3. Folie nach Anspruch 1 oder 2, **dadurch gekennzeichnet, daß** der amorphe Copolyester der siegelfähigen Deckschicht A Ethylenterephthalat in einem Anteil von 40 bis 95 Mol-% und Ethylenisophthalat in einem Anteil von 60 bis 5 Mol-% enthält, bevorzugt Ethylenterephthalat in einem Anteil von 50 bis 90 Mol-% und Ethylenisophthalat in einem Anteil von 50 bis 10 Mol-% enthält und ganz bevorzugt Ethylenterephthalat in einem Anteil von 60 bis 85 Mol-% und Ethylenisophthalat in einem Anteil von 40 bis 15 Mol-% enthält.

4. Folie nach einem oder mehreren der Ansprüche 1 bis 3, **dadurch gekennzeichnet, daß** die matte Deckschicht C ein Blend oder eine Mischung aus zwei Komponenten I und II und gegebenenfalls Additive in Form von inerten anorganischen Antiblockmitteln enthält.

5. Folie nach einem oder mehreren der Ansprüche 1 bis 4, **dadurch gekennzeichnet, daß** die Konzentration des Flammschutzmittels im Bereich von 0,5 bis 30,0 Gew.-%, vorzugsweise von 1,0 bis 20,0 Gew.-%, bezogen auf das Gewicht der jeweiligen Schicht des verwendeten Polyesters , liegt.

6. Folie nach einem oder mehreren der Ansprüche 1 bis 5, **dadurch gekennzeichnet, daß** als Flammschutzmittel organische Phosphorverbindungen, vorzugsweise Carboxyphosphinsäuren, deren Anhydride und Dimethyl-methylphosphonat enthalten sind.

7. Folie nach einem oder mehreren der Ansprüche 1 bis 6, **dadurch gekennzeichnet, daß** Regenerat in einer Konzentration bis zu 60 Gew.-%, bezogen auf das Gesamtgewicht der Folie, enthalten ist.

8. Verfahren zur Herstellung einer einseitig matten, siegelfähigen, flammhemmend ausgerüsteten, biaxial orientierten Polyesterfolie nach Anspruch 1 mit mindestens einer Basisschicht B auf Basis eines thermoplastischen Polyesters, einer siegelfähigen Deckschicht A und einer weiteren matten Deckschicht C, wobei in mindestens einer Schicht ein Flammschutzmittel enthalten ist, das über die Masterbatch-Technologie zugeben wird, und wobei das Masterbatch vorkristallisiert und/oder vorgetrocknet ist, **dadurch gekennzeichnet, daß** die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert) und die biaxial gestreckte Folie thermofixiert wird.

9. Verfahren nach Anspruch 8, **dadurch gekennzeichnet, daß** die Folie an der zur Behandlung vorgesehenen Oberflächenschicht corona- oder flammbehandelt wird.

10. Verfahren nach Anspruch 8 oder 9, **dadurch gekennzeichnet, daß** das Flammschutzmittel im Masterbatch in einem Verhältnis von Flammschutzmittel zu Thermoplast im Bereich von 60 zu 40 Gew.-% bis 10 zu 90 Gew.-% vorliegt.

18

**11.** Verfahren nach einem oder mehreren der Ansprüche 8 bis 10, **dadurch gekennzeichnet, daß** im Masterbatch zusätzlich ein Hydrolysestabilisator in Form von phenolischen Stabilisatoren, Alkali-/Erdalkalistearaten und/oder Alkali-/Erdalkalicarbonaten in Mengen von 0,05 bis 0,6 Gew.-%, vorzugsweise 0,15 bis 0,3 Gew.-% und mit einer Molmasse von mehr als 500 g/mol eingesetzt wird.

**12.** Verwendung der Folie nach einem oder mehreren der Ansprüche 1 bis 7 für die Anwendung im Innen- und Außenbereich.

**13.** Verwendung nach Anspruch 12 im Innenbereich für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium und im Außenbereich für Gewächshäuser, im Werbesektor, Überdachungen, Außenverkleidungen, Abdeckungen von Materialien, Anwendungen im Bausektor und Lichtwerbeprofile.

## Claims

**1.** A sealable, flame-retardant, coextruded, biaxially oriented polyester film with one matt side and with at least one base layer B based on a thermoplastic polyester, and with a sealable outer layer A, and with another matt outer layer C, where a flame retardant is present in at least one layer, wherein the sealable outer layer A has a minimum sealing temperature of 110°C and a seal seam strength of at least 1.3 N/15 mm, and the topographies of the two outer layers A and C have the following features
sealable outer layer A:

- $R_a$ < 30 nm
- value measured for gas flow from 500 to 4000 s

non-sealable, matt outer layer C:

- 200 nm < $R_a$ < 1000 nm
- value measured for gas flow < 50 s.

**2.** The film as claimed in claim 1, wherein the sealable outer layer A comprises an amorphous copolyester which has been built up from ethylene terephthalate units and ethylene isophthalate units and from ethylene glycol units.

**3.** The film as claimed in claim 1 or 2, wherein the amorphous copolyester of the sealable outer layer A comprises from 40 to 95 mol% of ethylene terephthalate and from 60 to 5 mol% of ethylene isophthalate, preferably from 50 to 90 mol% of ethylene terephthalate and from 50 to 10 mol% of ethylene isophthalate and very preferably from 60 to 85 mol% of ethylene terephthalate and from 40 to 15 mol% of ethylene isophthalate.

**4.** The film as claimed in one or more of claims 1 to 3, wherein the matt outer layer C comprises a blend or a mixture made from two components I and II and, where appropriate, comprises additives in the form of inert inorganic antiblocking agents.

**5.** The film as claimed in one or more of claims 1 to 4, wherein the concentration of the flame retardant is in the range from 0.5 to 30.0% by weight, preferably from 1.0 to 20.0% by weight, based on the weight of the respective layer of the polyester used.

**6.** The film as claimed in one or more of claims 1 to 5, wherein the flame retardants present are organophosphorus compounds, preferably carboxyphosphinic acids, anhydrides of these, or dimethyl methylphosphonate.

**7.** The film as claimed in one or more of claims 1 to 6, wherein recycled material is present at a concentration of up to 60% by weight, based on the total weight of the film.

**8.** A process for producing a sealable, flame-retardant, biaxially oriented polyester film with one matt side as claimed in claim 1, and with at least one base layer B based on a thermoplastic polyester, and with a sealable outer layer A, and with another matt outer layer C, where at least one layer comprises a flame retardant which is added by way of masterbatch technology, and where the masterbatch has been precrystallized and/or predried, wherein the melts corresponding to the individual layers of the film are coextruded through a flat-film die, the resultant film is drawn off on one or more rollers for solidification, and then the film is biaxially stretched (oriented) and the biaxially stretched film is heat-set.

**9.** The process as claimed in claim 8, wherein the film is corona- or flame-treated on the surface layer intended for treatment.

**10.** The process as claimed in claim 8 or 9, wherein the percentage ratio by weight of flame retardant to thermoplastic in the masterbatch is from 60:40 to 10:90.

**11.** The process as claimed in one or more of claims 8 to 10, wherein the masterbatch also uses a hydrolysis stabilizer in the form of phenolic stabilizers, alkali metal/alkaline earth metal stearates and/or alkali metal/alkaline earth metal carbonates, in amounts of from 0.05 to 0.6% by weight, preferably from 0.15 to 0.3% by weight, and with a molar mass of more than 500 g/mol.

**12.** The use of the film as claimed in one or more of claims 1 to 7 for indoor or outdoor applications.

**13.** The use as claimed in claim 12 indoors for interior decoration, for the construction of exhibition stands, for exhibition requisites, as displays, for placards, for protective glazing of machines or of vehicles, in the lighting sector, in the fitting out of shops or of stores, as a promotional item or a laminating medium, or outdoors for greenhouses, in the advertising sector, roofing systems, exterior cladding, protective coverings for materials, construction sector applications, or for illuminated advertising profiles.

**Revendications**

**1.** Feuille polyester orientée biaxialement, coextrudée, apprêtée d'ignifuge, scellable et mate sur une face, ayant au moins une couche de base B à base d'un polyester thermoplastique, une couche de recouvrement A scellable et une autre couche de recouvrement C mate, au moins une couche contenant un agent ignifugeant, **caractérisée en ce que** la couche de recouvrement A scellable présente une température d'amorçage du scellage de 110°C et une résistance du point de scellage d'au moins 1,3 N/15 mm et les topographies des deux couches de recouvrement A et C possèdent les caractéristiques suivantes :

Couche de recouvrement A scellable :

- Valeur $R_a$ < 30 nm
- Valeur de mesure du courant gazeux 500 à 4000 s

Couche de recouvrement C mate non scellable

- 200 nm < $R_a$ < 1000 nm
- Valeur de mesure du courant gazeux < 50 s

**2.** Feuille selon la revendication 1, **caractérisée en ce que** la couche de recouvrement A scellable contient un copolyester amorphe, qui est constitué d'unités d'éthylène téréphtalate et d'éthylène isophtalate et d'unités d'éthylène glycol.

**3.** Feuille selon la revendication 1 ou 2, **caractérisée en ce que** le copolyester amorphe de la couche de recouvrement A scellable contient de l'éthylène téréphtalate en une proportion allant de 40 à 95 % en moles et de l'éthylène isophtalate en une proportion allant de 60 à 5 % en moles, de préférence de l'éthylène téréphtalate en une proportion allant de 50 à 90 % en moles et de l'éthylène isophtalate en une proportion allant de 50 à 10 % en moles et en particulier de l'éthylène téréphtalate en une proportion allant de 60 à 85 % en moles et de l'éthylène isophtalate en une proportion allant de 40 à 15 % en moles.

**4.** Feuille selon l'une quelconque ou plusieurs des revendications 1 à 3, **caractérisée en ce que** la couche de recouvrement C mate contient un mélange ou un blend de deux composants I et II, et éventuellement des additifs sous forme d'agents anti-bloquants inorganiques inertes.

5. Feuille selon l'une quelconque ou plusieurs des revendications 1 à 4, **caractérisée en ce que** la concentration en ignifugeant se situe dans la plage allant de 0,5 % en poids à 30,0 % en poids, de préférence 1,0 % en poids à 20,0 % en poids, par rapport au poids de la couche respective du polyester utilisé.

6. Feuille selon l'une quelconque ou plusieurs des revendications 1 à 5, **caractérisée en ce qu'**elle contient à titre d'agents ignifugeants des composés phosphoriques organiques, de préférence des acides carboxyphosphiniques, leurs anhydrides et le diméthylméthylphosphonate.

7. Feuille selon l'une quelconque ou plusieurs des revendications 1 à 6, **caractérisée en ce qu'**elle contient un produit recyclé est à une concentration allant jusqu'à 60 % en poids par rapport au poids total de la feuille.

8. Procédé de fabrication d'une feuille polyester orientée biaxialement, coextrudée, apprêtée d'ignifugeant, scellable et mate d'un seul côté selon la revendication 1, composée d'au moins une feuille de polyester ayant au moins une couche de base B à base d'un polyester thermoplastique, une couche de recouvrement A scellable et une autre couche de recouvrement C mate, au moins une couche contenant un agent ignifugeant, qui est ajouté par la technologie du mélange-maître et où le mélange-maître est précristallisé et/ou préséché, **caractérisé en ce que** les matières fondues correspondant aux différentes couches de la feuille sont extrudées par le biais d'une buse plate, **en ce que** la feuille ainsi obtenue est passée sur un ou plusieurs rouleaux pour solidification, **en ce que** la feuille est ensuite étirée (orientée) biaxialement et **en ce que** la feuille étirée biaxialement est thermofixée.

9. Procédé selon la revendication 8, **caractérisée en ce que** la feuille subit un traitement à la flamme ou corona sur la couche de surface prévue pour le traitement.

10. Procédé selon la revendication 8 ou 9, **caractérisé en ce que** l'agent ignifugeant dans le mélange-maître (masterbatch) est présent en un rapport de l'ignifugeant sur le thermoplastique allant de 60 à 40 % en poids à 10 à 90 % en poids.

11. Procédé selon l'une quelconque ou plusieurs des revendications 8 à 10, **caractérisée en ce qu'**un stabilisateur d'hydrolyse est mis en oeuvre en plus dans le mélange-maître sous forme de stabilisateurs phénoliques, stéarates d'alcalins /d'alcalino-terreux et/ou carbonates d'alcalins / d'alcalino-terreux en des quantités allant de 0,05 à 0,6 % en poids, en particulier de 0,15 à 0,3 % en poids et avec une masse molaire de plus de 500 g/mol.

12. Utilisation de la feuille selon l'une quelconque ou plusieurs des revendications 1 à 7 pour l'utilisation en intérieur et en extérieur.

13. Utilisation selon la revendication 12 en intérieur pour les habillages d'habitacle intérieur, pour l'installation des foires et les articles de foire, comme affichages, pour les panneaux, pour les verres protecteurs de machines et de véhicules, dans le secteur de l'éclairage, dans l'agencement des magasins et des étals, comme article publicitaire, produit de laminage et en extérieur pour les serres, dans le secteur de la publicité, pour les toitures, pour les habillages externes, pour les couvertures de matériaux, pour des applications dans le secteur du bâtiment et pour des profilés publicitaires lumineux.